# EUROPÄISCHE PATENTANMELDUNG

(11) **EP 1 906 503 A1**
(43) Veröffentlichungstag der Anmeldung: **02.04.2008**
(21) Anmeldenummer: 06020178.7
(22) Anmeldetag: 26.09.2006
(51) Int. Cl.: H02G 5/10

(54) **Generatorableitung für einen Kraftwerksgenerator**

(71) Anmelder: SIEMENS AKTIENGESELLSCHAFT, 80333 München (DE)
(72) Erfinder: Feuerstein, Winfried, 91058 Erlangen (DE)

(57) **Zusammenfassung**

Die Erfindung betrifft eine Generatorableitung (2) für einen Kraftwerksgenerator (6) mit einem rohrförmigen Leiter (4), einer rohrförmigen Kapselung (10) des Leiters (4) und einer Ventilationsvorrichtung (16, 42) mit einem Antrieb (18) und einem vom Antrieb (18) angetriebenen Lüfter (20) zum Erzeugen eines Luftstroms (34) innerhalb der Kapselung (10). Es wird vorgeschlagen, dass die Ventilationsvorrichtung (16, 42) ein Aufnahmemittel (22) zur Aufnahme von Antriebsenergie für den Antrieb (18) aus dem Leiter (4) aufweist. Die Generatorableitung (2) kann kompakt ausgeführt sein und bei geringer Erwärmung eine hohe Stromtragfähigkeit aufweisen.

## Beschreibung

Die Erfindung betrifft eine Generatorableitung für einen Kraftwerksgenerator mit einem rohrförmigen Leiter, einer rohrförmigen Kapselung des Leiters und einer Ventilationsvorrichtung mit einem Antrieb und einem vom Antrieb angetriebenen Lüfter zum Erzeugen eines Luftstroms innerhalb der Kapselung.

Eine Generatorableitung eines Kraftwerksgenerators ist eine elektrische Verbindung zwischen einer Ständerwicklung des Kraftwerksgenerators und einer Wicklung eines zugehörigen Trafos des Kraftwerks, üblicherweise eines Maschinen- oder Blocktrafos. Der konstruktive Aufbau dieser elektrischen Verbindung ist üblicherweise einphasig isoliert, wobei jeder der drei Stromleiter des 3-phasigen Drehstromsystems in einer separaten elektrischen Kapselung, die als sogenannte Ableitungshülle, auch Hüllrohr bezeichnet, ausgeführt sein kann, in einer koaxialen Struktur angeordnet ist. Die Generatorableitung ist eine Hochstrom-Verbindung, die zur Durchleitung sehr hoher Ströme in Verbindung mit hohen Spannungen ausgelegt ist. Üblicherweise liegen die Spannungen im Mittelspannungsbereich, also zwischen 12 kV und 36 kV. Liefert beispielsweise ein Kraftwerksgenerator eines Dampfkraftwerks eine Leistung von 600 MW bis 900 MW bei einer Ausgangsspannung von 21 kV bis 27 kV, so ergibt sich eine Stromstärke von 18 kA bis 25 kA, für die die Generatorableitung zum Transformator ausgelegt sein muss.

Erschwerend kommt hinzu, dass der Strom durch eine solche Zuleitung durch den Skin-Effekt an den Außenbereich des Leiters drängt, so dass dort sehr hohe Querschnittsströme auftreten, die erhebliche Stromwärmeverluste bewirken. Der Skin-Effekt beschreibt den Umstand, dass ein durch einen Leiter fließender Wechselstrom im Inneren des Leiters Wirbelströme erzeugt, die dem Erzeugerstrom entgegengerichtet sind. Da das vom Wechselstrom induzierte Magnetfeld im Inneren des Leiters stärkere Wirbelströme induziert als am Rand, ist die hierdurch im Inneren des Leiters erzeugte Gegenspannung am größten und schwächt sich zu dessen Rand hin ab. Durch den großen Blindwiderstand im Inneren des Leiters fließt der Strom im Wesentlichen am Rand. Bei einem Kupferleiter ist die Skin-Tiefe, bei der die Stromdichte unter den Faktor 1/e abgesunken ist, bei 50 Hz etwa 9 mm. Daher tragen Leitungsbereiche eines Kupferleiters, die unterhalb von etwa 20 mm unter der radial äußeren Leitungsoberfläche liegen, kaum zur Stromleitung bei.

Die Stromdichte in der Generatorableitung kann so hoch sein, dass die Stromwärmeverluste den Leiter und das den Leiter umgebende Hüllrohr sehr aufheizen. Diese Stromwärmeverluste werden durch Konvektion und Strahlung abgeführt. Um nach den Normen IEC oder ANSI geforderte maximal zulässige Temperaturen von weniger als 90°C am Leiter und weniger als 70°C am Hüllrohr einzuhalten, muss sowohl der Leiterdurchmesser und dessen Wandstärke als auch das Hüllrohr entsprechend dimensioniert werden. So kann ein rohrförmiger Leiter einer Generatorableitung, der üblicherweise aus Reinaluminium gefertigt ist, einen Durchmesser von bis zu 1 m und eine Wandstärke von 20 mm aufweisen.

Zur Kühlung des Leiters und des Hüllrohrs ist es beispielsweise aus der DE 28 33 128 bekannt, mit Hilfe einer Belüftungsanlage einen Luftstrom im Hüllrohr zu erzeugen und die warme Abluft abzuführen. Eine solche Belüftung erfordert eine Installation einer Belüftungsanlage mit Luftkanälen zu und von den Hüllrohren, Absperrklappen und elektrischen Antrieben und deren Energieversorgung, die einen zusätzlichen Platzbedarf im Bereich des Maschinenhauses beanspruchen.

Es ist die Aufgabe der vorliegenden Erfindung, eine kleinbauende elektrische Generatorableitung für einen Kraftwerksgenerator mit einer hohen Stromtragfähigkeit anzugeben, mit der eine Erwärmung des elektrischen Leiters und des Hüllrohrs gering gehalten werden kann.

Diese Aufgabe wird durch eine Generatorableitung der Eingangs genannten Art gelöst, bei der die Ventilationsvorrichtung erfindungsgemäß ein Aufnahmemittel zur Aufnahme von Antriebsenergie für den Antrieb aus dem Leiter aufweist. Es kann auf eine externe Stromversorgung verzichtet werden und die Ventilationsvorrichtung kann einfach gehalten sein. Außerdem kann der Antrieb eng an den Leiter oder die Kapselung gebunden werden, so dass die Generatorableitung kompakt gehalten werden kann. Die Antriebsenergie kann unmittelbar aus dem Leiter aufgenommen werden, beispielsweise über eine entsprechende elektrische Zuleitung oder über ein Feld, das der Leiter erzeugt. Der Leiter ist üblicherweise einer von drei Leitern für eine Drehstromanbindung.

Vorteilhafterweise umfasst die Generatorableitung drei jeweils einzeln gekapselte rohrförmige Leiter, wobei jedem Leiter eine Ventilationsvorrichtung mit jeweils einem Antrieb und einem Aufnahmemittel zur Aufnahme von Antriebsenergie für den Antrieb aus dem Leiter zugeordnet ist. Die einzelnen Bauelemente der Ventilationsvorrichtungen können klein gehalten werden und es kann auf eine ein größeres Bauvolumen benötigende Verrohrung zwischen den Leitern bzw. deren Kapselungen verzichtet werden.

Gemäß einer bevorzugten Ausführungsform der Erfindung ist die Ventilationsvorrichtung innerhalb der Kapselung angeordnet. Hierbei ist es ausreichend, wenn der Antrieb, der Lüfter und das Aufnahmemittel innerhalb der Kapselung angeordnet sind, wohingegen zusätzliche Bauteile, wie ein Kühler oder Luftfilter, außerhalb der Kapselung angeordnet sein können. Es kann Bauraum eingespart und die Anordnung kann kompakt gehalten werden. Außerdem kann auf Zuleitungen und dergleichen verzichtet und die Ventilationsvorrichtung kostengünstig gehalten werden.

In einer vorteilhaften Weiterbildung der Erfindung ist das Aufnahmemittel zur induktiven Aufnahme der Antriebsenergie vorgesehen. Bei Stromflüssen im kA-Bereich liegen energiereiche Magnetfelder vor, die für einen Betrieb des Antriebs ausreichende Energie zur Verfügung stellen können. Aus einem solchen Magnetfeld kann mit einfachen Mitteln Energie entnommen und dem Antrieb zur Verfügung gestellt werden.

In einer anderen Ausführungsform der Erfindung ist das Aufnahmemittel dazu vorgesehen, Antriebsenergie aus einem vom Leiter erzeugten elektrischen Feld aufzunehmen. Das zwischen dem Leiter und der Kapselung liegende Potentialgefälle kann oberhalb von 10 kV liegen. Bei einem Abstand von 500 mm zwischen eine Hüllrohr der Kapselung und dem Leiter wird dann vom Leiter ein elektrisches Feld oberhalb von 20 kV/m erzeugt. Mit Hilfe geeigneter Bauelemente, beispielsweise eines um den Leiter gelegten Kondensators und eines Schwingkreises, kann diesem Feld Energie entnommen und dem Motor zugeführt werden.

Soll die Antriebsenergie für den Antrieb induktiv aufgenommen werden, so kann das geschehen, indem das Magnetfeld des Leiters und der Antrieb so aufeinander abgestimmt sind, dass das Magnetfeld den Lüfter unmittelbar antreibt. Der Antrieb kann dann der Lüfter selbst sein, beispielsweise durch magnetische Rotorblätter, die das Aufnahmemittel bilden. Einfacher in der Realisierung ist ein Linearmotor im Magnetfeld als Antrieb. Noch einfacher ist ein Wechselstrommotor, wobei das Aufnahmemittel Wechselstrom zur Verfügung stellt und hierfür vorteilhafterweise einen Stromwandler umfasst. Der Stromwandler weist zweckmäßigerweise einen Ringkern auf, der um den Leiter geführt ist, so dass der Leiter somit als Primärwicklung mit einer Wicklung dient. Eine Sekundärwicklung kann um den Ringkern gewickelt und mit dem Antrieb, z.B. einem Motor, verbunden sein. Der Stromwandler ist in seiner Auslegung auf den Motor abgestimmt, insbesondere in der Weise, dass er bei maximaler Generatorleistung eine solche Spannung an den Motor liefert, dass er in seinem obersten für einen regulären Betrieb vorgesehenen Leistungsdrittel betrieben wird.

Der Ringkern des Stromwandlers ist im Magnetfeld des Leiters und zweckmäßigerweise zwischen dem Leiter und dem Hüllrohr der Kapselung angeordnet. Um eine übermäßiger Erhitzung des Ringkernmetalls durch Wirbelströme zu vermeiden, ist der Ringkern vorteilhafterweise in Schichten aus Blechen aufgebaut. Dennoch kann eine Erwärmung des Ringkerns nicht verhindert werden. Um eine gute Kühlung des Ringkerns zu gewährleisten ist der Ringkern vorteilhafterweise mit einem belüftbaren Abstand sowohl zum Leiter als auch zum Hüllrohr der Kapselung angeordnet.

Die Generatorableitung ist auch vorteilhaft dadurch weitergebildet, dass der Motor auf dem elektrischen Potential des Leiters gehalten ist. Es kann auf eine Mittelspannungsisolierung verzichtet werden. Zusätzlich kann der Motor ohne Aufwand in der Nähe des Leiters angeordnet, insbesondere am Leiter befestigt werden. Zweckmäßigerweise weisen alle drei Leiter der Generatorableitung einen Motor auf, die jeweils auf dem Potential des ihnen zugeordneten Leiters liegen.

Die Kapselung der Generatorableitung, z.B. ein Hüllrohr, ist üblicherweise auf Erdpotential gehalten. Der Raum zwischen dem Leiter und dem Hüllrohr dient der elektrischen Isolierung des Leiters nach außen und muss in den Maßen so bemessen sein, dass ein elektrischer Überschlag zwischen dem Leiter und der Kapselung wirksam vermieden wird. Um den Raum zwischen dem Leiter und der Kapselung möglichst weitgehend freizuhalten und eine Isolierwirkung des Raums nicht durch darin liegende Bauteile zu reduzieren, wird in einer weiteren Ausführungsform der Erfindung vorgeschlagen, dass der Motor innerhalb des Leiters angeordnet ist. Mit gleichem Vorteil ist der Lüfter zweckmäßigerweise innerhalb des Leiters angeordnet, insbesondere zusätzlich zum Motor.

Bei Stromwärmeverlusten des Leiters wird die erzeugte Wärme in die Umgebung des Leiters abgegeben, weshalb eine Kühlung des Leiters durch eine Luftzirkulation der ihn umgebenden Luft effektiv durchgeführt sein kann. Die Kühlwirkung kann demgegenüber noch gesteigert werden, wenn der Luftstrom innerhalb des Leiters verläuft. Im Innenraum des Leiters entsteht wegen des relativ kleinen Raums im Verhältnis zur Leiteroberfläche eine hohe Wärmedichte, so dass dort die Luft am meisten aufgeheizt wird. Mit Hilfe eines Abtransports der Luft aus dem Innenraum kann viel Wärme aus dem Innenraum abgeführt werden. Zweckmäßigerweise verläuft der Luftstrom zusätzlich im Zwischenraum zwischen dem Leiter und der Kapselung, um auch die dort erwärmte Luft zu einer Zirkulation zu bringen.

Ein Wärmeabtransport vom Innenraum des Leiters heraus, beispielsweise in den Zwischenraum zwischen dem Leiter und der Kapselung, kann in einfacher Art ermöglicht werden, wenn der Leiter Luftöffnungen aufweist, aus der die innerhalb des Leiters erwärmte Luft ausströmen kann. Vorteilhafterweise sind diese Luftöffnungen in Längsrichtung des Leiters länglich ausgeführt. Es kann eine relativ große Öffnungsfläche mit einem kleinen Leitungsquerschnittsverlust erreicht und eine zusätzliche Aufheizung des Leiters im Bereich der Luftöffnungen gering gehalten werden.

Ohne einen Luftstrom aus dem Inneren des Leiters heraus kann dort ein Stau warmer Luft entstehen, der eine Wärmeabführung aus dem Leiter verhindert. Insbesondere bei einer der Länge nach geneigten Generatorableitung steigt warme Luft sowohl im Inneren als auch im Zwischenraum zwischen Leiter und Kapselung in einen oberen Bereich des Leiters und der Kapselung auf, so dass dort eine Wärmeabfuhr kaum noch gegeben ist und sich der Leiter stark aufheizt. Ein solcher Hitzestau kann bereits vermieden werden, wenn der Luftstrom innerhalb der Kapselung ein geschlossener Luftstrom ist. Die Ventilationsvorrichtung kann sehr kompakt gehalten und zumindest weitgehend innerhalb der Kapselung angeordnet werden und Luft kann von innen nach außen bzw. von oben nach unten strömen und es kann ein gleichmäßiger und hoher Wärmeabtransport erreicht werden. Durch eine Verwendung von für eine Kühlung besonders vorteilhaftem Kühlgas anstelle von Luft im geschlossenen Luftstrom kann eine Kühlung weiter verbessert werden.

Eine sehr effektive Kühlung des Leiters und der Kapselung kann erreicht werden, wenn der Luftstrom eine Durchzugsbelüftung ist. Es kann ein Umluftkreis mit externer Kühlung oder eine Außenluftkühlung erreicht werden, bei der der Luftstrom aus der Kapselung heraus und frische Umgebungsluft aus der Umgebung der Generatorableitung in die Kapselung herein geführt wird.

Der Luftstrom kann besonders effektiv aus dem Leiter heraus geführt werden, wenn der Luftstrom durch einen Stützisolator geführt ist. Der Stützisolator dient zur Abstützung des Leiters innerhalb der Kapselung und kann hohl ausgeführt sein. Der Luftstrom kann ohne eine Durchmischung mit Luft aus dem Zwischenraum in den Leiter herein oder aus diesem heraus geführt werden.

Die Erfindung wird anhand von Ausführungsbeispielen näher erläutert, die in den Zeichnungen dargestellt sind. Es zeigen:
- FIG 1: eine Generatorableitung mit einer Ventilationsvorrichtung für einen Umluftbetrieb und
- FIG 2: eine Generatorableitung mit einer anderen Ventilationsvorrichtung für einen Frischluftbetrieb.

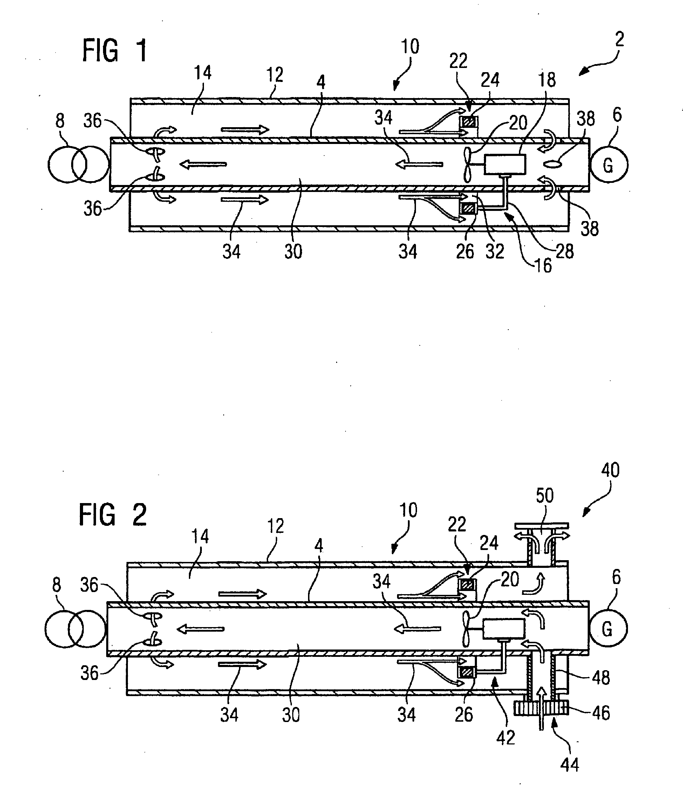

FIG 1 zeigt eine Generatorableitung 2 in einem schematischen Längsschnitt. Die Generatorableitung 2 umfasst einen rohrförmigen Leiter 4, der einen Kraftwerksgenerator 6 mit einem zugehörigen Transformator 8 elektrisch verbindet. Der Leiter 4 ist von einer Kapselung 10 mit einem Hüllrohr 12 umgeben, das elektrisch mit einer Erdung verbunden ist und auf Erdpotential liegt. Zwischen dem Hüllrohr 12 und dem Leiter 4 ist ein mit Luft gefüllter Zwischenraum 14 angeordnet zur elektrischen Isolierung des Leiters 4 vom Hüllrohr 12. Der Kraftwerksgenerator 6 ist außer durch den Leiter 4 der Generatorableitung 2 durch zwei weitere nicht dargestellte Leiter mit dem Transformator 8 verbunden zum Übertragen von Drehstrom zwischen dem Kraftwerksgenerator 6 und dem Transformator 8.

Innerhalb der Kapselung 10 ist die Generatorableitung 2 mit einer Ventilationsvorrichtung 16 ausgestattet, die einen als Motor ausgeführten Antrieb 18, einen vom Motor anteibbaren Lüfter 20 und ein Aufnahmemittel 22 zur induktiven Aufnahme von Antriebsenergie für den Motor aus dem Leiter 4 aufweist. Das Aufnahmemittel 22 umfasst einen Stromwandler mit einem Ringkern 24 und einer um den Ringkern 24 gewickelten Sekundärwicklung 26, die über eine Zuleitung 28 mit dem einphasigen Motor verbunden ist. Die Primärwicklung des Stromwandlers bildet der Leiter 4, der durch den Ringkern 24 verläuft.

Der motorische Antrieb 18 und der Lüfter 20 sind in einem Innenraum 30 des rohrförmigen Leiters 4 angeordnet und die Zuleitung 28 ist elektrisch isoliert durch den Leiter 4 geführt. Der Motor und der Lüfter 20 sind somit in einem magnetfeldfreien Raum gelegen, so dass das Magnetfeld des Leiters 4 den Betrieb des Motors nicht stört. Der Motor ist durch nicht dargestellte Befestigungsmittel an der Innenwandung des Leiters 4 befestigt und liegt elektrisch auf dem Potential des Leiters 4. Auf diese Weise erübrigt sich eine aufwendige elektrische Isolierung des Antriebs 18 vom Leiter 4.

Der Ringkern 24 des Stromwandlers ist im Zwischenraum 14 angeordnet und somit in einem vom Leiter 4 erzeugten Magnetfeld gelegen. Er ist an der Außenwandung des Leiters 4 befestigt und durch der Übersichtlichkeit halber nicht dargestellte Abstandshalter vom Leiter 4 ein Stück weit radial beabstandet, so dass zwischen dem Leiter 4 und dem Ringkern 24 ein radial etwa 3 cm breiter Ringspalt 32 verbleibt. Durch eine zusätzliche elektrische Verbindung wird ein vorhandener Metallschirm zur Potentialsteuerung des Stromwandlers mit dem Leiter 4 verbunden.

Während eines Betriebs der Generatorableitung 2 fließt Wechselstrom mit einer Stärke von beispielsweise 12 kA und einer Frequenz von 50 Hz durch den Leiter 4 und erzeugt um den Leiter 4 ein starkes Wechselmagnetfeld. Dieses induziert einen Strom im Ringkern 24, der wiederum eine Spannung in der Sekundärwicklung 26 induziert. Die Sekundärwicklung 26 und der Antrieb 18 sind hierbei so aufeinander abgestimmt, dass der Motor bei diesem Betrieb der Generatorableitung 2 mit einer Leistung von 400 VA betrieben wird.

Der Motor treibt den Lüfter 20 an, der einen Luftstrom 34 innerhalb der Kapselung 10 erzeugt. Die vom Lüfter 20 bewegte Luft strömt durch den Innenraum 30 des Leiters 4 und durch Luftöffnungen 36 im Leiter 4 aus dem Innenraum 30 in den Zwischenraum 14. Dort strömt die Luft in Längsrichtung des Leiters 4 zurück zur Ventilationsvorrichtung 16 und umströmt den Ringkern 24 radial innen und außen, um über weitere Luftöffnungen 38 wieder aus dem Zwischenraum 14 in den Innenraum 30 zu strömen. Dort umspült die Luft den Motor zur Kühlung und wird vom Lüfter 20 erneut bewegt. Die Luftöffnungen 36, 38 sind gleichmäßig über den Umfang des Leiters 4 verteilt und in Längsrichtung des Leiters 4 länglich ausgeführt, nämlich oval, um bei großer gesamter Öffnungsfläche nicht mehr als 30% des Leitungsquerschnitts zu nehmen.

Dadurch dass die Ventilationsvorrichtung 16 vollständig innerhalb der Kapselung 10 angeordnet ist, wird durch sie der Platzbedarf der Generatorableitung 2 nicht erhöht. Auch auf eine externe Steuerung des Antriebs 18 kann verzichtet werden, da dieser bei einem Betrieb der Generatorableitung 2 automatisch anläuft. Durch das Umluftsystem kann die Kühlung des Leiters 4 erheblich verbessert werden, da warme Luft vom Leiter 4 zum Hüllrohr 12 gelangt, dieses erwärmt und eine hohe Wärmeabstrahlung vom Hüllrohr 12 veranlasst. Gegenüber einer gleichen Generatorableitung, die Wärme nur durch Konvektion und Strahlung abgibt, kann die Stromtragfähigkeit bei gleichen Temperaturen des Leiters 4 und des Hüllrohrs 12 um 20% oder mehr erhöht werden.

Eine Generatorableitung 40 mit einer anderen Ventilationsvorrichtung 42 für einen Frischluftbetrieb ist in FIG 2 in einer schematischen geschnittenen Seitenansicht dargestellt. Die nachfolgende Beschreibung beschränkt sich im Wesentlichen auf die Unterschiede zum Ausführungsbeispiel in FIG 1, auf das bezüglich gleichbleibender Merkmale und Funktionen verwiesen wird. Im Wesentlichen gleichbleibende Bauteile sind grundsätzlich mit den gleichen Bezugszeichen beziffert.

Die Ventilationsvorrichtung 42 umfasst eine Ansaugeinrichtung 44 mit einem Luftfilter 46, durch den frische Umgebungsluft vom Lüfter 20 aus der Umgebung der Generatorableitung 42 oder durch ein Kanalsystem von einer weiteren Umgebung angesaugt wird. Nach der Reinigung im Luftfilter 46 gelangt die Luft in einen hohlen Stützisolator 48 aus einem Gießharz, der zum Positionieren und Stützen des Leiters 4 im Hüllrohr 12 dient. Mehrere über die Länge des Leiters 4 verteilte Gruppen umfassen jeweils drei Stützisolatoren 48, die um 120° zueinander in Umfangsrichtung des Leiters 4 zwischen dem Leiter 4 und dem Hüllrohr 12 angeordnet sind und den Leiter 4 in Position halten. Sie können Teil der Kapselung 10 sein und isolieren den Leiter 4 gegen das Hüllrohr 12.

Die Luft durchströmt im Stützisolator 48 eine Öffnung im Hüllrohr 12 und gelangt durch eine Öffnung im Leiter 4 in den Innenraum 30 des Leiters 4 und bildet dort den Luftstrom 34, der den Innenraum 30 und den Zwischenraum 14 durchströmt. Anschließend wird die Luft durch einen Auslass 50 wieder in die Umgebung geführt. Auf diese Weise gelangt stets frische und kühle Umgebungsluft in die Kapselung 10 und kühlt den Leiter 4 und das Hüllrohr 12.

Alternativ ist denkbar, dass die Luft nach dem Auslass 50 in einen Kühler geleitet und dort gekühlt wird, um anschließend in einem geschlossenen Kreislauf wieder zum Luftfilter 46 und in das Innere der Kapselung 10 geleitet zu werden. Hierdurch kann die Stromtragfähigkeit des Systems noch weiter erhöht werden.

## Patentansprüche

1. Generatorableitung (2) für einen Kraftwerksgenerator (6) mit einem rohrförmigen Leiter (4), einer rohrförmigen Kapselung (10) des Leiters (4) und einer Ventilationsvorrichtung (16, 42) mit einem Antrieb (18) und einem vom Antrieb (18) angetriebenen Lüfter (20) zum Erzeugen eines Luftstroms (34) innerhalb der Kapselung (10), **dadurch gekennzeichnet, dass** die Ventilationsvorrichtung (16, 42) ein Aufnahmemittel (22) zur Aufnahme von Antriebsenergie für den Antrieb (18) aus dem Leiter (4) aufweist.

2. Generatorableitung (2) nach Anspruch 1,
**dadurch gekennzeichnet, dass** die Ventilationsvorrichtung (16, 42) innerhalb der Kapselung (10) angeordnet ist.

3. Generatorableitung (2) nach Anspruch 1 oder 2,
**dadurch gekennzeichnet, dass** das Aufnahmemittel (22) zur induktiven Aufnahme der Antriebsenergie vorgesehen ist.

4. Generatorableitung (2) nach einem der vorhergehenden Ansprüche, **dadurch gekennzeichnet, dass** das Aufnahmemittel (22) einen Stromwandler umfasst.

5. Generatorableitung (2) nach einem der vorhergehenden Ansprüche, **dadurch gekennzeichnet, dass** der Antrieb (18) auf dem elektrischen Potential des Leiters (4) gehalten ist.

6. Generatorableitung (2) nach einem der vorhergehenden Ansprüche, **dadurch gekennzeichnet, dass** der Antrieb (18) innerhalb des Leiters (4) angeordnet ist.

7. Generatorableitung (2) nach einem der vorhergehenden Ansprüche, **dadurch gekennzeichnet, dass** der Luftstrom (34) innerhalb des Leiters (4) verläuft.

8. Generatorableitung (2) nach einem der vorhergehenden Ansprüche, **dadurch gekennzeichnet, dass** der Leiter (4) Luftöffnungen (36, 38) aufweist, die in Längsrichtung des Leiters (4) länglich ausgeführt sind.

9. Generatorableitung (2) nach einem der vorhergehenden Ansprüche, **dadurch gekennzeichnet, dass** der Luftstrom (34) innerhalb der Kapselung (10) ein geschlossener Luftstrom (34) ist.

10. Generatorableitung (2) nach einem der vorhergehenden Ansprüche, **dadurch gekennzeichnet, dass** der Luftstrom (34) eine Durchzugsbelüftung ist.

11. Generatorableitung (2) nach einem der vorhergehenden Ansprüche, **dadurch gekennzeichnet, dass** der Luftstrom (34) durch einen Stützisolator (48) geführt ist.
